# EUROPEAN PATENT SPECIFICATION

(11) **EP 2 307 692 B1**
(45) Date of publication and mention of the grant of the patent: **23.11.2016**
(21) Application number: 09738429.1
(22) Date of filing: 29.04.2009
(51) Int. Cl.: F02D 41/24, F02D 41/30, F02D 41/40, B60R 25/04

(54) **A SYSTEM FOR AND METHOD OF DEGRADING OR ANALYSING THE PERFORMANCE OF AN INTERNAL COMBUSTION ENGINE**
SYSTEM UND VERFAHREN ZUM VERRINGERN ODER ANALYSIEREN DER LEISTUNG EINES VERBRENNUNGSMOTORS
SYSTÈME ET PROCÉDÉ PERMETTANT DE RÉDUIRE OU ANALYSER LA PERFORMANCE D'UN MOTEUR À COMBUSTION INTERNE

(30) Priority: 30.04.2008 GB 0807859
(43) Date of publication of application: 13.04.2011
(73) Proprietor: Mobilizer Limited, Bolton BL3 2NG (GB)
(72) Inventor: HOWARTH, Mark, Vincent, Bury BL0 9NU (GB); ZYLA, Edward, Christopher, Manchester M30 7LG (GB)
(74) Representative: Lunt, Mark George Francis
(86) International application number: PCT/GB2009/050441
(87) International publication number: WO 2009/133399

(56) References cited:
- EP-A- 0 305 344
- EP-A- 0 554 838
- WO-A-99/65681
- WO-A-2007/104130
- NL-C2- 1 008 350
- US-A1- 2008 060 598

## Description

This invention is concerned with a system for, and method of, degrading the performance of an internal combustion engine, potentially leading to its total immobilisation. The invention also relates to a system for diagnosing engine performance. In general terms both proposals revolve around determining, and potentially interfering with, the amount of fuel injected into diesel or petrol engines. This involves measuring and, as appropriate, controlling the fuel supplied to the engine. The system is also useful in controlling the performance or efficiency of the engine.

### BACKGROUND

Since the introduction of electronic fuel injection for the supply of fuel to engines, many systems have been developed to meet the requirements of each fuel type and to address the demands of improved performance, efficiency and lower exhaust emissions. While each of the known systems shares the same basic principal of injecting fuel into an engine via an electronically controlled solenoid valve known as an injector, the control technology and the designs of the injectors themselves have differed greatly across a range of system design generations and engine fuel types.

It is difficult, therefore, using traditional pulse-width measurement methods, to determine the quantity of fuel delivered with each injection. Also, a wide variation in voltages, currents and injector drive techniques employed throughout the range of available fuelling systems makes it difficult or impossible to apply a system to reduce injection durations. All electronic fuel injection systems are controlled by an engine management system or power train control module (PCM), and the software used to programme the PCM varies considerably from one engine and vehicle manufacturer to another.

The present invention is concerned with means capable of being implemented in existing engines, without the need to know the particular injection system employed by the engine, or without having to adapt the implementation means in accordance with the particular system of the engine.

WO2007/104130 discloses a system that corrects the pulse width of a fuel injection signal according to variation in the pressure differential across a fuel injection valve, and whereby the appropriate amount of fuel can be injected. US 2008/0060598 A1 discloses the modifying of fuel injector control signals based upon detected variations in fuel provided to the engine.

It is an object of the present invention to provide a system for and method of degrading the performance of an internal combustion engine by controlling the fuel supply to the fuel injected diesel or petrol engines, the system being adaptable to the engine management systems of most, if not all, manufacturers, thus to provide an "add-on" or "bolt-on" arrangement that can operate independently of an existing PCM.

### SUMMARY OF THE INVENTION

According to a first aspect of the present invention there is provided an engine performance degrader for an internal combustion engine comprising an electronically controlled fuel injection system, the degrader being adapted for connection to the fuel supply system of the engine between an engine management computer or powertrain control module (PCM) of the engine and a fuel injector for the engine to interrupt the signals issued by the PCM to the injector and to supply modified signals to the injector, the immobiliser comprising means for measuring the normal duration of a pulsed supply of fuel to the injector, means for modifying the pulse length of the supply of fuel and a microprocessor for receiving signals from the measuring means and for transmitting signals to the pulse length modifying means to enable the pulse length to be modified thus to control the quantity of the fuel supplied to the engine.

Such a system can be used as a vehicle engine speed regulator, by monitoring and controlling the fuel supply and so that the engine speed is limited to a pre-set or communicated value. This has a variety of applications, a primary one of which is an automatic, after-theft, vehicle-speed-reduction system, whereby the vehicle may be brought gradually to a standstill or to a very low speed, remotely by a signal transmitter to the microprocessor. The signal may be from, for example, a police authority. Alternatively, use of the vehicle without the proper key might trigger gradual reduction in fuel supply. Interference with other systems of the vehicle could likewise be employed to trigger the system. For example, some vehicles employ tracking devices enabling their positions to be identified. Thieves generally know the location of such devices and may deactivate them or simply disconnect them. Such deactivation could be employed as a trigger for the degrader.

The gradual slowing of the vehicle is much safer, of course, for all persons concerned, than a sudden shut-off of the vehicle's engine that might be dangerous should it occur when the vehicle is driven at high speed, as it frequently is when just stolen.

The system can also be used to limit road and/or engine speed of a vehicle in accordance with a vehicle location, such as in a speed restriction zone, or according to driver experience, so that it may act as a governor to ensure that the vehicle cannot exceed a certain speed.

The system can also be employed as a traction control device, to reduce wheel spin under excessive acceleration. The activation device in this event may be a speed comparator between the different wheels of the vehicle with any marked divergence between them being interpreted as wheel spin and this being used to trigger degradation of the engine performance by reducing pulse length of injection pulses and or the pressure of fuel being injected.

Indeed, such an arrangement has application even in vehicles already provided with traction control, since most traction arrangements provided by car manufacturers are of the type that can be switched off, in which event there is no traction control, or switched on, in which event they generally prevent wheel spin entirely. However, the present invention has the capacity to permit intermediate levels of traction control. That is to say, the reduction in pulse length or fuel pressure may not only be a function of the amount of wheel spin detected but also the degree of control required. Thus, when a driver selects an intermediate degree of traction control the microprocessor may only activate when a substantial degree of wheel spin is detected and then only limit the fuel delivered (whether by reduced pulse length or fuel pressure) to a certain degree that still permits some relative wheel slippage.

An activation device (that does not necessarily form part of the present invention but which is implicit in such a system) activates the degrader when it is desired to slow down the vehicle in which the degrader is fitted. In the case of an anti-theft device, the activation device may be something that is remotely actuated by eg telephonic signal. However, it may be a radio signal or infra-red or ultrasonic, particularly in the case of a roadside system for calming traffic in a given location. Alternatively, the activation device may be something that is part of the vehicle. For example, it could be a detector that detects (when present) a key, that may or may not be the same thing as, or intimately connected with, the vehicle ignition key. In the case of a speed limiter, either for total speed control or traction control, it will comprise a speed detection device for the vehicle, or more especially, its wheels in the case of traction control.

It is a further object of the present invention to provide a system for and method of monitoring the performance of an internal combustion engine by measuring the fuel supply to the fuel injected diesel or petrol engines, the system being adaptable to the engine management systems of most, if not all, manufacturers, thus to provide a diagnostic kit that can operate independently of an existing PCM.

In accordance with this aspect of the present invention there is provided a diagnostic kit for an internal combustion engine comprising an electronically controlled fuel injection system, the kit being adapted for connection to the fuel supply system of the engine between an engine management computer or powertrain control module (PCM) of the engine and a fuel injector for the engine to interrupt the signals issued by the PCM to the injector and to supply corresponding signals to the injector, the kit comprising means for measuring the duration of a pulse supply of fuel to the injector, means for modifying the pulse length of the supply of fuel and a microprocessor for receiving signals from the measuring means and for transmitting signals to the pulse length modifying means to enable the pulse length to be modified thus to control the quantity of the fuel supplied to the engine, and output means to output transmit information concerning the pulse lengths applied by the PCM.

The degrader and/or kit may include means to monitor the instantaneous pressure of the fuel derived by a fuel pump and to modify the pressure as a parameter of the supply of the fuel to the engine. This is particularly imperative in the case of diesel engines where the fuel pressure is varied substantially as part of the fuel management system. Moreover, modifying the pressure is potentially another means of modifying the quantity of fuel delivered to the engine.

The pressure monitoring means may be the microprocessor adapted to receive signals from a pressure sensor and to transmit signals to the fuel pump. Alternatively, the signals from the pressure sensor are intercepted by the microprocessor and modified signals are supplied by the microprocessor to the PCM to cause the PCM to transmit modified signals to the fuel pump, thereby to change the fuel pressure of the pump.

The micro-processor may be connected to the PCM and adapted to transmit signals thereto representative of the overall fuel supply to the engine thus to emulate normal engine operational conditions as monitored by the PCM.

The means for measuring the normal duration of the pulsed supply of fuel to the injector may be a Hall Effect current sensing device producing an analogue signal, and connected, via an analogue to digital converter, to the microprocessor.

The means for modifying the pulsed length of the supply of fuel to the injector may be an optically coupled MOSFET switching block connected to the microprocessor. Preferably, the opto-coupling is through a photovoltaic coupler. "Modifying" the pulsed length here means only shortening of the pulse length, since the MOSFET switching block only permits passage of some or all of the existing pulse produced by the PCM and does not generate a pulse signal itself.

The Hall Effect current sensor and optically coupled MOSFET switching block may be connected such as to provide a low-resistance electrically conductive path completing a circuit between the PCM and the injector.

The system may include an opto-coupler connected in parallel to the optically coupled MOSFET switching block to detect any potential difference during an "off" state of the switching block. This is required in combination with the current sensor, which, of course, turns off when the MOSFET is switched off by the microprocessor. Indeed, the pulse length intended by the vehicle's PCM is the sum of the period of time that the Hall effect device detects current and the period of time that the opto-coupler detects a voltage across the switched-off MOSFET. Indeed, it is to be understood that the pulse whose length is modified by the MOSFET switching block, is that pulse which follows the pulse whose length is measured. That is to say, pulse length is always modified at least one pulse behind the pulse being measured. This is not, however, significant because the rate of pulses is so high that the difference between them from one cycle of the engine to the next is not significant.

It should also be pointed out, particularly with respect to modern diesel engines, that there may be several "sub-pulses" of varying duration in any one cylinder cycle. For the purposes of the present invention, a train of sub-pulses in one cycle is treated as a single pulse, but any one or more sub-pulses may have its pulse length modified and the sum of sub-pulses, together with the pressure of the fuel injected, establishes the overall pulse length and the overall quantity of fuel injected in any one cycle. Indeed, this latter factor enables the microprocessor, in the case of a diagnostic kit, for instance, to report a simplified version of the pulse sequence. That is to say a single pulse length, a single timing point and a single quantity of fuel, which may be of assistance to the engineer analysing the engine performance, rather than complete information about each sub-pulse.

The diagnostic kit preferably further comprises means to calculate the quantity of fuel delivered by each pulse and/or means to aggregate pulse lengths, fuel pressures associated therewith and fuel quantity delivered, of sub-pulses of an engine to which the kit is connected. Preferably, it also further comprises a display on which said output information is displayed. The diagnostic kit may comprise many of the features of the degrader described above.

Also according to the invention there is provided a method of determining the fuel supply to an electronically controlled fuel injected internal combustion engine, comprising the steps of connecting between an engine management computer or power train control module (PCM) of the engine, and a fuel injector of the engine, a system comprising means for measuring the normal duration of a pulsed supply of fuel to the injector, means for modifying the pulse length of the supply of fuel, and a microprocessor for receiving signals from the measuring means and for transmitting signals to the pulse length modifying means, causing by means of software in the microprocessor a signal representative of the normal duration of a pulsed supply of fuel to the injector to be measured and, as appropriate, causing the pulse length to be modified thus to control the fuel supplied to the engine and in turn controlling the speed and/or performance of the engine.

### BRIEF DESCRIPTION OF THE DRAWINGS

An embodiment of the invention, as applied to a diesel engine, will now be described, by way of example only, with reference to the accompanying drawings, in which:
- Fig. 1: is a diagram representing the manner of operation of the system to be described; and
- Fig. 2: is a circuit diagram of the system as applied to the PCM and each fuel injector of an engine.

### DETAILED DESCRIPTION

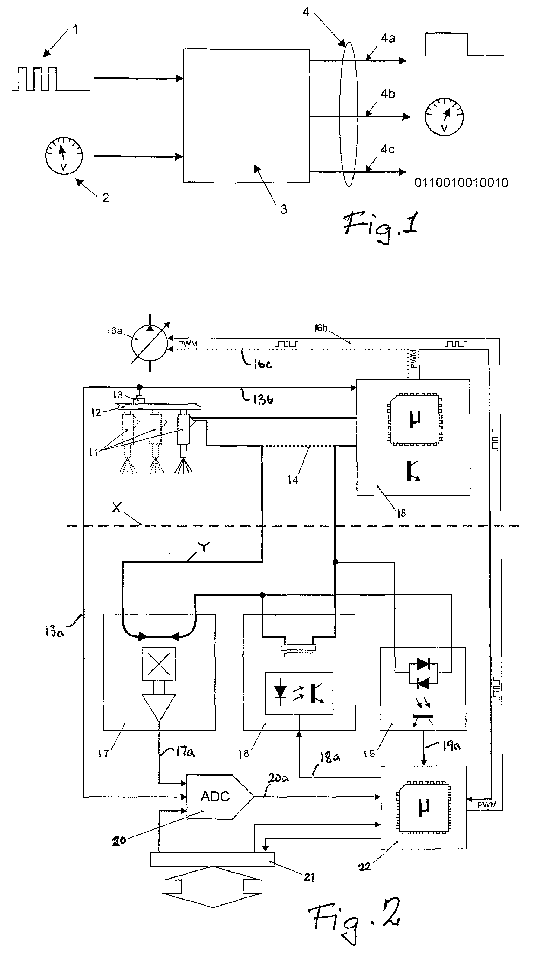

Referring now to Fig. 1, the system employed by the present invention is illustrated diagrammatically at 3 and is adapted to receive signals monitoring the injection pulses 1 applied to each injector from the engine management computer (15 in Fig. 2). These may consist of individual pulses or groups of pulses per engine cylinder combustion stroke. The total injection duration is calculated in system 3 and multiplied by a relative voltage 2 representing the fuel pressure derived from a fuel supply pump (16a in Fig. 2). Output data is generated at 4 representing the total fuel quantity delivered to the combustion chamber, and this may consist of one or more of an individual pulse 4a, per combustion, of variable pulse width, a variable voltage/current analogue output 4b, a digital output 4c, or a combination of all three.

Referring now to Fig. 2, a dotted line X represents a point of connection of the system illustrated below the line X, to an engine management computer or powertrain control module (PCM) and the engine injectors, which are represented above the line X.

Therefore, the engine to which this system is to be connected will include a series of fuel injectors 11 in the form of electrically operated valves, all connected to a common fuel supply rail 12, an engine management computer (PCM) 15 and a fuel pump 16a. A pressure sensor 13 produces a signal representative of the instantaneous fuel pressure in the rail 12 and transmits on line 13b the signal to the PCM 15, which is connected also to the fuel pump 16a.

The system of the invention is connected to the component above the line X by interrupting the normal circuit from the PCM 15 to each injector 11 as shown at 14, and so an entire system as illustrated below the line X is required and connected between the PCM 15 and each of the injectors 11.

Therefore, the intercepted circuit 14 is replaced by a circuit including a Hall Effect current sensing device 17 and an optically coupled MOSFET switching block 18. The resultant circuit illustrated by the thickened line Y provides a low-resistance, electrically conductive path thus completing the circuit and ensuring any changes made to the injector control circuit characteristics by its insertion are negligible, and completing the circuit between the PCM and the injector.

An opto-coupler 19 is connected in parallel with the MOSFET switching block 18 to enable detection of any potential difference in the circuit during the MOSFET "off" state, during operation. The opto-coupler 19 is connected to a microprocessor 22, an output of which is also connected to the MOSFET switching block 18, while the analogue signal from the Hall Effect current sensor 17 is supplied via a multiplexed analogue to digital converter (ADC) 20 to the microprocessor 22. The signal from the pressure sensor 13 is also connected to the microprocessor 22 via ADC 20.

Opto-coupling devices are commonly used to provide a degree of electrical isolation between circuits. They do this by combining a light emitting device and a light sensitive device to enable a signal to be optically 'transmitted' between the circuits. The light sensitive device controls or limits the current flow in one circuit in response to the current applied to the light emitting device in the other circuit. One common example application could be a microprocessor controlling a higher voltage circuit, such as a mains-powered lighting circuit. The optical link ensures that there is no electrical path between the high and low voltage circuits, thus improving operator safety and preventing mains voltages entering the low voltage circuit, especially in the event of component failure.

When semiconductors, such as MOSFETs, need to be controlled by an electrically isolated circuit, photovoltaic opto-couplers can provide a better solution than regular opto-couplers. This is because, in order to operate, semiconductors such as MOSFETs require a control voltage (or gate voltage) that is relative to the voltage of the circuit they are switching. A photovoltaic opto-coupler operates in much the same way as a standard opto-coupler, but instead of containing a light sensitive device to control current, it is able to generate a voltage. The voltage generated is electrically isolated from the light emitting circuit voltages, meaning that it can be electrically connected to a high voltage circuit without compromising circuit isolation. This enables the generation of control voltages that are relative to the high voltage circuit (as is necessary for controlling MOSFETs) without the need for a separate isolated power source.

Thus the opto-coupler of the 19 may be driven by the high voltage side and its detector on the low voltage side simply varies current on the low voltage side. However, the opto-coupler of the switching block 18 is preferably photovoltaic so that a voltage may applied to the MOSFET gate in addition to whatever voltage is already on the high voltage side creating a potential difference sufficiently large to switch the MOSFET.

Any or all external circuits having an affect upon or receiving effective signals from the system are represented at 21 and are thus connected to the microprocessor 22 both to receive signals from and to transmit signals to the latter.

As shown at 16b, there is a connection between the fuel pump 16a and the microprocessor 22 which is also connected to the PCM 15. The normal link 16c from the PCM 15 to the pump 16a is interrupted.

In use, analogue signal voltages from the fuel pressure sensor 13 (on line 13a), the Hall Effect current sensing device 17 (on line 17a), and external control voltages are converted into digital signals by the ADC 20, while signals from the latter (on line 20a), from the opto-coupler 19 (on line 19a), and from external control interface circuits 21 are received and monitored by the microprocessor 22.

The microprocessor 22 mathematically combines the fuel pressure reading from pressure sensor 13 and the duration of injection pulses as read by the Hall Effect current sensor 17 thus providing a proportional digital output signal from the microprocessor 22 representing the relative quantity of fuel injected into the engine.

The microprocessor 22 is programmed to enable a fuel injection pulse generated by the PCM 15 and transmitted to the injector 11 to be interrupted if necessary at a predetermined point in time by transmitting a signal to the MOSFET switching block 18 (on line 18a) thus to turn off the supply pulse at a precise moment, prematurely stopping the injection of fuel into the combustion chamber.

Accordingly, a predetermined and controlled injection of fuel takes place during one combustion stroke so that the overall fuel supply to the combustion chamber is controlled.

The microprocessor 22 may also intercept the fuel pump pressure control signals 16b to cause the fuel pressure to be modified. This is not essential in all cases, since the pressure can be a constant while the volume of the fuel supply is controlled and modified as appropriate. However, it is also possible to interrupt the connection between the pressure sensor 13 and the PCM 15 by removing line 13b. Instead, the processor 22 has an output (not shown) replacing the connection 13b to the PCM from the sensor 13 and informing the PCM that the fuel pressure is different (if modification of fuel pump pressure is required) from that actually measured by the sensor 13, and thereby causing the PCM to modify its output 16b. In this case, the connection 16b is not implemented and the existing connection, as per the dotted line 16c, is retained.

Since the system, in this example, is readily connected physically to and between the

PCM 15 and injector 11 of any electronically controlled fuel injected engine (and likewise between either or both of the connections between the PCM on the one hand and the fuel pump 16a and pressure sensor 13 on the other), the microprocessor 22 can be programmed to bring about a control of a single or dual fuel supply to the engine to control the performance, improve efficiency and reduce emissions, irrespective of the design of the engine or the control imposed over it by the PCM 15. It can also, of course, provide control of the fuel supply for the purposes with which the present invention is primarily concerned, namely performance degradation and diagnostic analysis. By imposing a control over the fuel supplied to the injectors 11, the system can be used for many purposes, including electronic fuel injection fault diagnosis. By providing an injected fuel quantity reference, this acts as a means of checking and confirming correct fuel delivery.

It can be used as a vehicle engine speed regulator by monitoring and controlling the fuel supply so that the engine speed is limited to a pre-set value. This is the feature exploited by the present invention that provides an automatic after-theft vehicle speed reduction capacity, whereby the vehicle may be brought gradually to a standstill or to a very low speed in a safe manner. This can be achieved remotely, for example, by a signal transmitter to the microprocessor from a police authority. Alternatively, a built-in detector may require the proximity of a key, that may or may not be constituted by the normal vehicle ignition key. However, none of these ancillary aspects are a part of the present invention which resides in the recognition that the fuel monitoring system described herein has a particularly attractive application in the vehicle immobilisation field.

Nevertheless, the system can also be used to limit road and/or engine speed of a vehicle in accordance with a vehicle location, such as in a speed restriction zone, or according to driver experience so that it may act as a governor to ensure that the vehicle cannot exceed a certain speed.

The system is fully bi-directional so that it may be connected in either polarity and it is electrically isolated so that high voltages cannot enter the control circuit and voltages within the control circuit do not affect the injector circuit voltages. The system may be used with both diesel and gasoline direct injection engines. While in operation current sensing within the circuit is monitored by the Hall Effect sensor 17, and any improper current flow conditions within the circuit can be rectified by switching off the MOSFET switching block 18 thus protecting the circuit from damage.

## Claims

1. An engine performance degrader for an internal combustion engine comprising an electronically controlled fuel injection system, the degrader being adapted for connection to the fuel supply system of the engine between an engine management computer or powertrain control module (PCM) of the engine and a fuel injector for the engine to interrupt the signals issued by the PCM to the injector and to supply modified signals to the injector, the degrader comprising means for measuring the normal duration of a pulsed supply of fuel to the injector, means for shortening the pulse length of the supply of fuel and a microprocessor for receiving signals from the measuring means and for transmitting signals to the pulse length modifying means to enable the pulse length to be modified thus to control the quantity of the fuel supplied to the engine.

2. A degrader according to claim 1 including means to monitor the instantaneous pressure of the fuel derived by a fuel pump.

3. A degrader according to claim 2, wherein said pressure monitoring means also includes means to modify the pressure as a parameter of the supply of the fuel to the engine; preferably wherein the pressure monitoring means is the microprocessor and is adapted to receive signals from a pressure sensor and transmit signals to control the fuel pump.

4. A degrader according to any preceding claim wherein:
the microprocessor is connected to the PCM and adapted to transmit signals thereto representative of the overall fuel supply to the engine thus to emulate engine operational conditions absent an intervention by the degrader and as would otherwise be monitored by the PCM; and/or
the means for measuring the duration of the pulsed supply of fuel to the injector is a Hall Effect current sensing device producing an analogue signal, and connected, via an analogue to digital converter, to the microprocessor; and/or
the means for modifying the pulsed length of the supply of fuel to the injector is an optically coupled MOSFET switching block connected to the microprocessor.

5. A degrader according to claim 4, wherein the Hall Effect current sensor and optically coupled MOSFET switching block are connected such as to provide a low-resistance electrically conductive path completing a circuit between the PCM and the injector; preferably wherein the MOSFET switching block is optically coupled by a photovoltaic opto-coupler; and preferably including an opto-coupler connected in parallel to the optically coupled MOSFET switching block to detect any potential difference during an "off" state of the switching block.

6. A degrader as claimed in any preceding claim further comprising an activation device to commence degradation of the fuel supply to the engine whereby the vehicle is reduced in its speed capacity.

7. A degrader as claimed in claim 6, wherein:
said activation device comprises means responsive to a signal external of the vehicle, and said signal external of the vehicle is provided by fixed roadside means delimiting an area of desired reduced speed; or
said activation device comprises means responsive to a signal external of the vehicle, said signal external of the vehicle is provided by a selectively operable transmitter, whereby the degrader constitutes an anti-theft device for the vehicle; or
said activation device comprises means responsive to a signal internal of the vehicle, and said signal internal of the vehicle is provided by detection means detecting that the vehicle has been taken without authority, whereby the degrader constitutes an anti-theft device for the vehicle; or
wherein said activation device comprises means responsive to a signal internal of the vehicle, said signal internal of the vehicle is provided by a vehicle speed governor.

8. A degrader as claimed in claim 7, wherein the speed governor determines the overall speed of the vehicle; or wherein the speed governor determines the relative speed between different wheels of the vehicle and thereby constitutes traction control for the vehicle; and preferably wherein the speed governor is adjustable to alter the relative speed permitted between different wheels before the activation device is activated.

9. A degrader as claimed in claim 7 or 8, wherein the response of the microprocessor to activation by the activation device is adjustable to vary the degree of engine performance degradation in response to relative speed between different wheels.

10. An electronically controlled fuel injected internal combustion engine comprising at lease one combustion chamber, a fuel injector connected to the combustion chamber and a supply of fuel, a microprocessor connected between an engine management computer or powertrain control module (PCM) of the engine, and the injector, and a degrader as claimed in any preceding claim.

11. A method of degrading the instantaneous performance of an electronically-controlled fuel-injected internal combustion engine, comprising the steps of connecting between an engine management computer or power train control module (PCM) of the engine, and a fuel injector of the engine a degrader comprising means for measuring the normal duration of a pulsed supply of fuel to the injector, means for modifying the pulse length of the supply of fuel, and a microprocessor for receiving signals from the measuring means and for transmitting signals to the pulse length modifying means, causing by means of software in the microprocessor a signal representative of the normal duration of a pulsed supply of fuel to the injector to be measured and, as appropriate, causing the pulse length to be shortened to control the fuel supplied to the engine and in turn controlling the speed and/or performance of the engine.

12. A method according to claim 11 comprising the step of causing the microprocessor to receive signals representative of the instantaneous pressure of the fuel derived by a fuel pump for the engine, and modifying the pressure as a parameter of the supply of fuel to the engine.

13. A method according to claim 11 or 12 wherein the microprocessor is caused to transmit signals to the PCM representative of the overall fuel supply to the engine thus to emulate engine operational conditions absent an intervention by the degrader and as would otherwise be monitored by the PCM.

14. A method according to any of claims 11 to 13, wherein the controlled fuel supply to the engine is determined by monitoring the duration of the supply of the fuel by the injector in relation to a signal representative of the instantaneous fuel pressure derived from the fuel pump, and interrupting the supply at a predetermined point in time.

15. A method according to any of claims 11 to 14, wherein a signal is sent to control the fuel pump to modify the fuel pressure in addition to or as an alternative to modification of the duration of the pulsed fuel supply to the engine.

## Patentansprüche

1. Motorleistungsreduzierungseinrichtung für einen Verbrennungsmotor, umfassend ein elektronisch gesteuertes Kraftstoffeinspritzsystem, wobei die Reduzierungseinrichtung mit dem Kraftstoffzufuhrsystem des Motors zwischen einem Motormanagementcomputer oder einem Antriebsstrangsteuergerät (PCM als englische Abkürzung für Powertrain Control Module) des Motors und einer Kraftstoffeinspritzeinrichtung für den Motor verbunden werden kann, um die von dem PCM an die Einspritzeinrichtung ausgegebenen Signale zu unterbrechen und um der Einspritzeinrichtung modifizierte Signale zuzuführen, wobei die Reduzierungseinrichtung eine Einrichtung zum Messen der normalen Dauer einer gepulsten Kraftstoffzufuhr an die Einspritzeinrichtung umfasst, eine Einrichtung zur Verkürzung der Pulslänge der Kraftstoffzufuhr und einen Mikroprozessor für den Empfang von Signalen von der Messeinrichtung und zur Übermittlung von Signalen an die Pulslängenmodifizierungseinrichtung, um eine Modifizierung der Pulslänge zu ermöglichen, um dadurch die dem Motor zugeführte Kraftstoffmenge zu steuern.

2. Reduzierungseinrichtung nach Anspruch 1, mit einer Einrichtung zur Überwachung des momentanen Drucks des von einer Kraftstoffpumpe abgeleiteten Kraftstoffs.

3. Reduzierungseinrichtung nach Anspruch 2, wobei die Drucküberwachungseinrichtung ferner eine Einrichtung zur Modifizierung des Drucks als einen Parameter der Kraftstoffzufuhr an den Motor aufweist; wobei die Drucküberwachungseinrichtung vorzugsweise der Mikroprozessor ist und in der Lage ist, Signale von einem Drucksensor zu empfangen und Signale zur Steuerung der Kraftstoffpumpe zu übermitteln.

4. Reduzierungseinrichtung nach einem der vorstehenden Ansprüche, wobei:
der Mikroprozessor mit dem PCM verbunden ist und zu diesem Signale übermitteln kann, welche die Kraftstoffzufuhr an den Motor insgesamt darstellen, um so die Motorbetriebsbedingungen ohne Intervention durch die Reduzierungseinrichtung zu emulieren und wie sie sonst durch das PCM überwacht werden würde; und/oder
die Einrichtung zum Messen der Dauer der gepulsten Kraftstoffzufuhr an die Einspritzeinrichtung eine Hall-Effekt-Strommessvorrichtung ist, die ein analoges Signal erzeugt und über einen Analog-Digital-Umsetzer mit dem Mikroprozessor verbunden ist; und/oder
die Einrichtung zur Modifizierung der Pulslänge der Kraftstoffzufuhr an die Einspritzeinrichtung ein optisch gekoppelter MOSFET-Schaltblock ist, der mit dem Mikroprozessor verbunden ist.

5. Reduzierungseinrichtung nach Anspruch 4, wobei der Hall-Effekt-Stromsensor und der optisch gekoppelte MOSFET-Schaltblock so verbunden sind, dass sie einen niederohmigen, elektrisch leitfähigen Pfad bereitstellen, der einen Schaltkreis zwischen dem PCM und der Einspritzeinrichtung fertigstellt; wobei der MOSFET-Schaltblock vorzugsweise durch einen photovoltaischen Optokuppler optisch gekoppelt ist; und vorzugsweise mit einem Optokuppler, der parallel zu dem optisch gekoppelten MOSFET-Schaltblock verbunden ist, um jede während einem "ausgeschalteten" Zustand des Schaltblocks auftretende Potentialdifferenz zu erkennen.

6. Reduzierungseinrichtung nach einem der vorstehenden Ansprüche, ferner umfassend eine Aktivierungsvorrichtung zum Beginn der Reduzierung der Kraftstoffzufuhr an den Motor, wodurch die mögliche Geschwindigkeit des Fahrzeugs reduziert wird.

7. Reduzierungseinrichtung nach Anspruch 6, wobei:
die Aktivierungsvorrichtung eine Einrichtung umfasst, die auf ein Signal von außerhalb des Fahrzeugs anspricht, und wobei das Signal von außerhalb des Fahrzeugs bereitgestellt wird durch eine fest installierte Einrichtung am Straßenrand, die einen Bereich mit gewünschter herabgesetzter Geschwindigkeit abgrenzt;
oder wobei die Aktivierungseinrichtung eine Einrichtung umfasst, die auf ein Signal von außerhalb des Fahrzeugs anspricht, wobei das Signal von außerhalb des Fahrzeugs durch einen selektiv bedienbaren Sender bereitgestellt wird, wobei die Reduzierungseinrichtung eine Diebstahlschutzvorrichtung für das Fahrzeug ist; oder
die Aktivierungsvorrichtung eine Einrichtung umfasst, die auf ein Signal von innerhalb des Fahrzeugs anspricht, und wobei das Signal von innerhalb des Fahrzeugs durch eine Erkennungseinrichtung bereitgestellt wird, die erkennt, dass das Fahrzeug unbefugt entwendet worden ist, wobei die Reduzierungseinrichtung eine Diebstahlschutzvorrichtung für das Fahrzeug ist; oder
wobei Aktivierungsvorrichtung eine Einrichtung umfasst, die auf ein Signal von innerhalb des Fahrzeugs anspricht, wobei das Signal von innerhalb des Fahrzeugs durch einen Fahrzeuggeschwindigkeitsregler bereitgestellt wird.

8. Reduzierungseinrichtung nach Anspruch 7, wobei der Geschwindigkeitsregler die Geschwindigkeit des Fahrzeugs insgesamt bestimmt; oder wobei der Geschwindigkeitsregler die relative Geschwindigkeit zwischen verschiedenen Rädern des Fahrzeugs bestimmt und somit eine Traktionskontrolle für das Fahrzeug vorsieht; und wobei der Geschwindigkeitsregler vorzugsweise einstellbar ist, um die zwischen verschiedenen Rädern zulässige Geschwindigkeit zu verändern, bevor die Aktivierungsvorrichtung aktiviert wird.

9. Reduzierungseinrichtung nach Anspruch 7 oder 8, wobei das Ansprechverhalten des Mikroprozessors auf die Aktivierung durch die Aktivierungsvorrichtung anpassbar ist, um das Ausmaß der Reduzierung der Motorleistung als Reaktion auf die relative Geschwindigkeit zwischen verschiedenen rädern zu verändern.

10. Elektronisch gesteuerter Verbrennungsmotor mit Kraftstoffeinspritzung, umfassend wenigstens eine Brennkammer, eine mit der Brennkammer und einer Kraftstoffzufuhr verbundene Kraftstoffeinspritzeinrichtung, einen Mikroprozessor, der zwischen einem Motormanagementcomputer oder einem Antriebsstrangsteuergerät (PCM für Powertrain Control Module) des Motors und der Kraftstoffeinspritzeinrichtung verbunden ist, uns eine Reduzierungseinrichtung nach einem der vorstehenden Ansprüche.

11. Verfahren zur Reduzierung der Momentanleistung eines elektronisch gesteuerten Verbrennungsmotors mit Kraftstoffeinspritzung, umfassend die Schritte des Verbindens einer Reduzierungseinrichtung zwischen einem Motormanagementcomputer oder einem Antriebsstrangsteuergerät (PCM für Powertrain Control Module) des Motors und einer Kraftstoffeinspritzeinrichtung des Motors, mit einer Einrichtung zum Messen der normalen Dauer einer gepulsten Kraftstoffzufuhr an die Einspritzeinrichtung, einer Einrichtung zum Modifizieren der Pulslänge der Kraftstoffzufuhr und einem Mikroprozessor für den Empfang von Signalen von der Messeinrichtung und zur Übermittlung von Signalen an die Pulslängenmodifizierungseinrichtung, wobei mittels Software in dem Mikroprozessor bewirkt wird, dass ein Signal gemessen wird, das die normale Dauer einer gepulsten Kraftstoffzufuhr an die Einspritzeinrichtung darstellt, und wobei, sofern angemessen, eine Verkürzung der Pulslänge bewirkt wird, um den dem Motor zugeführten Kraftstoff zu regeln und um wiederum die Geschwindigkeit und/(oder die Leistung des Motors zu steuern.

12. Verfahren nach Anspruch 11, umfassend den Schritt des Bewirkens, dass der Mikroprozessor Signale empfängt, die den momentanen Druck des von einer Kraftstoffpumpe für den Motor abgeleiteten Kraftstoffs darstellen, und des Modifizierens des Drucks als einen Parameter der Kraftstoffzufuhr an den Motor.

13. Verfahren nach Anspruch 11 oder 12, wobei bewirkt wird, dass der Mikroprozessor Signale an das PCM übermittelt, welche die Kraftstoffzufuhr an den Motor insgesamt darstellen, um so die Motorbetriebsbedingungen ohne Intervention durch die Reduzierungseinrichtung zu emulieren und wie sie sonst durch das PCM überwacht werden würde.

14. Verfahren nach einem der Ansprüche 11 bis 13, wobei die gesteuerte Kraftstoffzufuhr an den Motor bestimmt wird durch Überwachung der Dauer der Kraftstoffzufuhr durch die Einspritzeinrichtung im Verhältnis zu einem Signal, das den momentanen Kraftstoffdruck darstellt, der von der Kraftstoffpumpe abgeleitet ist, und Unterbrechung der Zufuhr zu einem vorbestimmten Zeitpunkt.

15. Verfahren nach einem der Ansprüche 11 bis 14, wobei ein Signal gesendet wird, um die Kraftstoffpumpe so zu steuern, dass der Kraftstoffdruck modifiziert wird zusätzlich oder alternativ zu der Modifizierung der Dauer der gepulsten Kraftstoffzufuhr an den Motor.

## Revendications

1. Dispositif réducteur de performance de moteur pour un moteur à combustion interne comprenant un système d'injection de carburant à commande électronique, le dispositif réducteur étant conçu pour être connecté au circuit d'alimentation en carburant du moteur entre un ordinateur de gestion de moteur ou un module de commande de groupe motopropulseur (PCM) du moteur et un injecteur de carburant pour le moteur pour interrompre les signaux transmis par le PCM à l'injecteur et pour fournir des signaux modifiés à l'injecteur, le dispositif réducteur comprenant un moyen pour mesurer la durée normale d'une alimentation pulsée de carburant à l'injecteur, un moyen pour raccourcir la longueur d'impulsion de l'alimentation en carburant et un microprocesseur pour recevoir des signaux du moyen de mesure et pour transmettre des signaux au moyen de modification de longueur d'impulsion pour permettre à la longueur d'impulsion d'être modifiée et ainsi commander la quantité de carburant fournie au moteur.

2. Dispositif réducteur selon la revendication 1, comprenant un moyen pour surveiller la pression instantanée du carburant obtenue par une pompe à carburant.

3. Dispositif réducteur selon la revendication 2, ledit moyen de surveillance de pression comprenant également un moyen pour modifier la pression en tant que paramètre d'alimentation en carburant au moteur ; de préférence, le moyen de surveillance de pression étant le microprocesseur et étant conçu pour recevoir des signaux d'un capteur de pression et transmettre des signaux pour commander la pompe à carburant.

4. Dispositif réducteur selon l'une quelconque des revendications précédentes :
le microprocesseur étant connecté au PCM et conçu pour lui transmettre des signaux représentatifs de l'alimentation globale en carburant au moteur pour ainsi imiter les conditions opérationnelles du moteur en cas d'absence d'intervention du dispositif réducteur et ainsi qu'autrement surveillé par le PCM ; et/ou
le moyen de mesure de la durée de l'alimentation pulsée en carburant à l'injecteur étant un dispositif de détection de courant à effet Hall produisant un signal analogique et étant connecté, par l'intermédiaire d'un convertisseur analogique numérique, au microprocesseur ; et/ou
le moyen de modification de la longueur pulsée de l'alimentation en carburant à l'injecteur étant un bloc de commutation MOSFET couplé optiquement connecté au microprocesseur.

5. Dispositif réducteur selon la revendication 4, le capteur de courant à effet Hall et le bloc de commutation MOSFET optiquement couplé étant connectés de sorte à fournir un chemin électriquement conducteur de faible résistance fermant un circuit entre le PCM et l'injecteur ; de préférence, le bloc de commutation MOSFET étant couplé optiquement par un optocoupleur photovoltaïque ; et comprenant de préférence un optocoupleur connecté en parallèle au bloc de commutation MOSFET couplé optiquement pour détecter toute différence potentielle au cours d'un état « arrêt » du bloc de commutation.

6. Dispositif réducteur selon l'une quelconque des revendications précédentes, comprenant en outre un dispositif d'actionnement pour commencer la réduction de l'alimentation en carburant au moteur, moyennant quoi le véhicule est réduit dans sa capacité de vitesse.

7. Dispositif réducteur selon la revendication 6 :
ledit dispositif d'actionnement comprenant un moyen sensible à un signal externe du véhicule, et ledit signal externe du véhicule étant fourni par un moyen routier fixe délimitant une zone de vitesse réduite souhaitée ; ou
ledit dispositif d'actionnement comprenant un moyen sensible à un signal externe du véhicule, et ledit signal externe du véhicule étant fourni par un émetteur sélectivement utilisable, moyennant quoi le dispositif réducteur constitue un dispositif antivol pour le véhicule ; ou
ledit dispositif d'actionnement comprenant un moyen sensible à un signal interne du véhicule, et ledit signal interne du véhicule étant fourni par un moyen de détection détectant que le véhicule a été pris sans autorisation, moyennant quoi le dispositif réducteur constitue un dispositif antivol pour le véhicule ; ou
ledit dispositif d'actionnement comprenant un moyen sensible à un signal interne du véhicule, ledit signal interne du véhicule étant fourni par un régulateur de vitesse du véhicule.

8. Dispositif réducteur selon la revendication 7, le régulateur de vitesse déterminant la vitesse globale du véhicule ; ou le régulateur de vitesse déterminant la vitesse relative entre les différentes roues du véhicule et constituant ainsi un dispositif de contrôle de la traction du véhicule ; et de préférence le régulateur de vitesse étant réglable pour modifier la vitesse relative permise entre différentes roues avant que le dispositif d'actionnement ne soit actionné.

9. Dispositif réducteur selon la revendication 7 ou 8, la réponse du microprocesseur à l'actionnement par le dispositif d'actionnement étant réglable pour faire varier le degré de réduction des performances moteur en réponse à la vitesse relative entre les différentes roues.

10. Moteur à combustion interne à injection de carburant à commande électronique comprenant au moins une chambre de combustion, un injecteur de carburant connecté à la chambre de combustion et une alimentation en carburant, un microprocesseur connecté entre un ordinateur de gestion de moteur ou un module de commande de groupe motopropulseur (PCM) du moteur et l'injecteur, et un dispositif réducteur selon l'une quelconque des revendications précédentes.

11. Procédé de réduction des performances instantanées d'un moteur à combustion interne à injection de carburant à commande électronique comprenant les étapes consistant à connecter entre un ordinateur de gestion de moteur ou un module de commande de groupe motopropulseur (PCM) du moteur et un injecteur de carburant du moteur un dispositif réducteur pour mesurer la durée normale d'une alimentation pulsée en carburant à l'injecteur, un moyen de modification de la longueur d'impulsion de l'alimentation en carburant, et un microprocesseur pour recevoir des signaux du moyen de mesure et pour transmettre des signaux au moyen de modification de longueur d'impulsion, amenant au moyen d'un logiciel dans le microprocesseur un signal représentatif de la durée normale d'une alimentation pulsée en carburant à l'injecteur à être mesuré et, le cas échéant, amenant la longueur d'impulsion à être raccourcie pour commander le combustible fourni au moteur et puis commander la vitesse et/ou la performance du moteur.

12. Procédé selon la revendication 11, comprenant l'étape consistant à amener le microprocesseur à recevoir des signaux représentatifs de la pression instantanée du carburant obtenue par une pompe à carburant pour le moteur, et à modifier la pression en tant que paramètre de l'alimentation en carburant au moteur.

13. Procédé selon la revendication 11 ou 12, le microprocesseur étant amené à transmettre au PCM des signaux représentatifs de l'alimentation globale en carburant au moteur pour ainsi imiter les conditions opérationnelles du moteur en cas d'absence d'intervention du dispositif réducteur et ainsi qu'autrement surveillé par le PCM.

14. Procédé selon l'une quelconque des revendications 11 à 13, l'alimentation commandée en carburant au moteur étant déterminée en contrôlant la durée de l'alimentation du carburant par l'injecteur par rapport à un signal représentatif de la pression de carburant instantanée obtenue par la pompe à carburant, et interrompant l'alimentation à un point prédéterminé dans le temps.

15. Procédé selon l'une quelconque des revendications 11 à 14, un signal étant envoyé pour commander la pompe à carburant afin de modifier la pression de carburant en plus ou à la place de la modification de la durée de l'alimentation pulsée en carburant au moteur.
